# EUROPEAN PATENT APPLICATION

(11) **EP 4 447 213 A1**
(43) Date of publication of application: **16.10.2024**
(21) Application number: 22903300.6
(22) Date of filing: 01.12.2022
(51) Int. Cl.: H01M 50/244, H01M 50/249, H01M 50/296

(54) **BATTERY PACK BOX BODY, BATTERY PACK AND VEHICLE**

(30) Priority: 07.12.2021 CN 202123058402 U
(71) Applicant: Beijing Chehejia Automobile Technology Co., Ltd., Beijing 101300 (CN)
(72) Inventor: LIU, Yangbin, Beijing 101300 (CN)
(74) Representative: Maiwald GmbH
(86) International application number: PCT/CN2022/135966
(87) International publication number: WO 2023/103878

(57) **Abstract**

The present disclosure relates to the technical field of vehicles, and in particular to a battery pack box body, a battery pack and a vehicle. The battery pack box body provided by the present disclosure comprises a cross beam, the cross beam comprises a top surface, and a mounting slot for mounting an output electrode base is formed in the top surface. The battery pack provided by the present disclosure comprises the battery pack box body provided by the present disclosure. The vehicle provided by the present disclosure comprises the battery pack provided by the present disclosure.

## Description

### CROSS-REFERENCE TO RELATED APPLICATION

This application is based on and claims priority to Chinese Patent Application Serial No. 202123058402.1, filed on December 7, 2021, the entire contents of which are incorporated herein by reference.

### FIELD

The present disclosure relates to the field of vehicles, and in particular to a casing for a battery pack, a battery pack and a vehicle.

### BACKGROUND

In the field of electric vehicles, battery packs plays an irreplaceable and important role as a power source of the electric vehicles. The battery packs generally include a casing and a battery cell arranged in the casing.

The casing for the battery packs is one of the core components of the battery packs, and an accommodation chamber is defined in an interior of the casing for the battery packs for accommodating the battery cell. The traditional casing of the battery packs mainly includes a left edge beam, a right edge beam, a front-end plate, a rear-end plate, and a middle cross beam. The traditional cross beam is only configured to define a plurality of accommodating spaces in an accommodating chamber, with a single function.

### SUMMARY

To solve or at least partially solve the technical problems above, the present disclosure provides a casing for a battery pack, a battery pack and a vehicle.

A first aspect of the present disclosure provides a casing for a battery pack, including: a cross beam, in which the cross beam includes a top surface, and the top surface defines a mounting groove configured to mount an output electrode base.

In some embodiments, the cross beam includes a first side surface, the first side surface defines a first avoidance groove, and the first avoidance groove extends along a length direction of the cross beam and is configured to mount a collecting tube.

In some embodiments, the first avoidance groove forms a support plate configured to support the collecting tube, and the support plate extends along the length direction of the cross beam.

In some embodiments, a number of the support plates is consistent with a number of the collecting tubes, and each group of the collecting tubes is positioned on one of the support plates.

In some embodiments, the first avoidance groove forms two support plates arranged in an up-and-down direction, a coupling plate is provided between the two support plates arranged in the up-and-down direction, and the coupling plate is provided with a grooved structure.

In some embodiments, the cross beam includes a second side surface opposite to the first side surface; and
the cross beam defines a through hole for an inlet pipe or an outlet pipe to pass through, and the through hole extends through the first side surface and the second side surface.

In some embodiments, the second side surface forms a reinforcing rib, and the reinforcing rib defines a cable tie hole configured to fix a wire harness.

In some embodiments, the first side surface defines a second avoidance groove configured to mount an adapter block; and
the cross beam defines an adapter block mounting hole configured to mount the adapter block, and the adapter block mounting hole is arranged to extend through the second avoidance groove and the second side surface.

In some embodiments, a mounting seat is formed at an end of the cross beam along a length direction L of the cross beam, the mounting seat includes a mounting surface, and the mounting surface defines an edge beam mounting hole configured to couple to an edge beam.

In some embodiments, the mounting surface defines a groove configured to mount a sealing member, and the groove is arranged around the edge beam mounting hole.

In some embodiments, the mounting surface defines a plurality of grooves, the plurality of grooves are spaced in a direction outward from a center of the edge beam mounting hole, and a sealing ring is provided in each groove.

In some embodiments, a bottom plate of the cross beam is provided with a plurality of first protrusions, and a bottom surface of the first protrusion defines a mounting hole, and a steel wire thread sleeve is embedded in the mounting hole to fix a bottom component of the cross beam.

In some embodiments, the bottom plate of the cross beam is provided with a plurality of second protrusions, and the second protrusion defines a threaded hole.

A second aspect of the present disclosure provides a battery pack including the casing for the battery pack.

A third aspect of the present disclosure provides a vehicle including the battery pack.

The casing for the battery pack provided by embodiments of the present disclosure includes the cross beam, the cross beam includes the top surface, and the top surface defines the mounting groove configured to mount the output electrode base. The output electrode base may be assembled on the cross beam through the mounting groove, enabling the cross beam to have a function of mounting an electrode pole of a battery module, i.e., the mounting groove for the output electrode base is integrated on a basis of the cross beam, enriching the function of the traditional cross beam and solving the problem of single function of the traditional cross beam.

In addition, a width of the cross beam is larger than a width of an end plate of the battery module, which allows to mount a larger output electrode base, and thus may also withstand a higher voltage, provide a larger creepage gap, embed a nut with a larger specification, and play a better role in safety protection and stronger mounting and fixation.

### BRIEF DESCRIPTION OF THE DRAWINGS

The accompanying drawings here are incorporated into the specification and form a part of this specification, illustrating embodiments in accordance with the present disclosure and being used together with the specification to explain the principle of the present disclosure.

In order to provide a clearer explanation of technical solutions in embodiments of the present disclosure or the related art, a brief introduction will be given below to the accompanying drawings required in descriptions of embodiments or the related art. It is evident that for those skilled in the art, other accompanying drawings may be obtained based on these accompanying drawings without paying a creative labor.
FIG. 1 is a schematic diagram of a cross beam according to an embodiment of the present disclosure.
FIG. 2 is another schematic diagram of a cross beam according to an embodiment of the present disclosure.
FIG. 3 is another schematic diagram of a cross beam according to an embodiment of the present disclosure.
FIG. 4 is an A-A sectional view of FIG. 3.
FIG. 5 is a B-B sectional view of FIG. 3.
FIG. 6 is a schematic diagram of a mounting seat in a cross beam according to an embodiment of the present disclosure.

Reference Signs: 1. top surface; 11. mounting groove; 111. first aperture; 112. second aperture; 2. first side surface; 21a, first avoidance groove; 21b, second avoidance groove; 211. support plate; 22. weight reduction groove; 23. coupling plate; 231. grooved structure; 24. jacking rod; 25. cylindrical protrusion; 26. depression; 3. second side surface; 32. reinforcing rib; 321. cable tie hole; 41. through hole; 42. adapter block mounting hole; 5. mounting seat; 50. mounting surface; 51. edge beam mounting hole; 52. groove; 61. first protrusion; 62. second protrusion; 7. sealing member.

### DETAILED DESCRIPTION

In order to more clearly understand the above purpose, features and advantages of the present disclosure, the solution of the present disclosure will be further described below. It should be noted that, embodiments disclosed herein and the features in embodiments may be combined with each other without conflict.

Many specific details are elaborated in the following description to facilitate a full understanding of the present disclosure, but the present disclosure may be implemented in other ways different from those described herein. Obviously, embodiments in the specification are merely part of embodiments disclosed herein, rather than all of embodiments.

A battery pack includes a casing and a battery module arranged in the casing. The casing may be made of aluminum, aluminum alloy or other metal materials, and an accommodation chamber is defined in the casing.

In some embodiments, the casing is a box structure with an open top and includes an upper casing cover. A size of the upper casing cover corresponds to a size of an opening at the top of the casing. The upper casing cover may be fixed to the opening by a bolt or other fasteners, forming the accommodation chamber. Meanwhile, in order to improve a sealing of the casing, a sealing member may also be arranged between the upper casing cover and the casing.

In some embodiments, the battery pack is provided with a cross beam, and the cross beam may divide the casing into a plurality of containing chambers. The accommodation chamber of the casing may accommodate one or more battery modules. The battery modules may be arranged side by side along a length direction of the battery pack or along a width direction of the battery pack in the casing, and the battery modules are fixed to the casing.

In some embodiments, the battery module comprises a plurality of battery cells. The battery cell may be a secondary battery that may be used for repeated charging and discharging. The plurality of battery cells are stacked with each other, and a stacking direction may be a length direction, a width direction, or a height direction.

The battery cell includes a case, the case may be hexahedral or other shapes, and an interior of the case defines a containing chamber configured to accommodate an electrode assembly and electrolyte. The case may include a metal material, such as aluminum or aluminum alloy etc., and may also include an insulating material, such as a plastic, etc.

Adjacent battery modules are connected through an output electrode coupling piece, and the output electrode coupling piece is coupled to output electrodes of the adjacent battery modules. Specifically, the output electrode coupling piece is correspondingly provided with a mounting hole, and a bolt of an output electrode base is correspondingly mounted in the mounting hole, achieving an electrical coupling between the plurality of battery modules. The battery module includes the output electrode base, and the output electrode base is configured to provide an insulating protection for the output electrode coupling piece in the battery module. When the plurality of battery modules are coupled to form the battery pack, the output electrode coupling piece is coupled to each output electrode base through a plurality of bolts, and the positioning of the output electrode coupling piece may be achieved through the plurality of bolts.

The traditional mounting manner of the output electrode coupling piece is usually that the output electrode base is arranged at a positive electrode and a negative electrode of each battery module; the output electrode base is usually fixed on an end plate, and the output electrode coupling piece is coupled to an electrode pole of the battery module through a bolt, to be fixed on the end plate of the battery module.

The cross beam provided in embodiments of the present disclosure has a mounting groove 11, and the output electrode base may be mounted in the mounting groove 11.

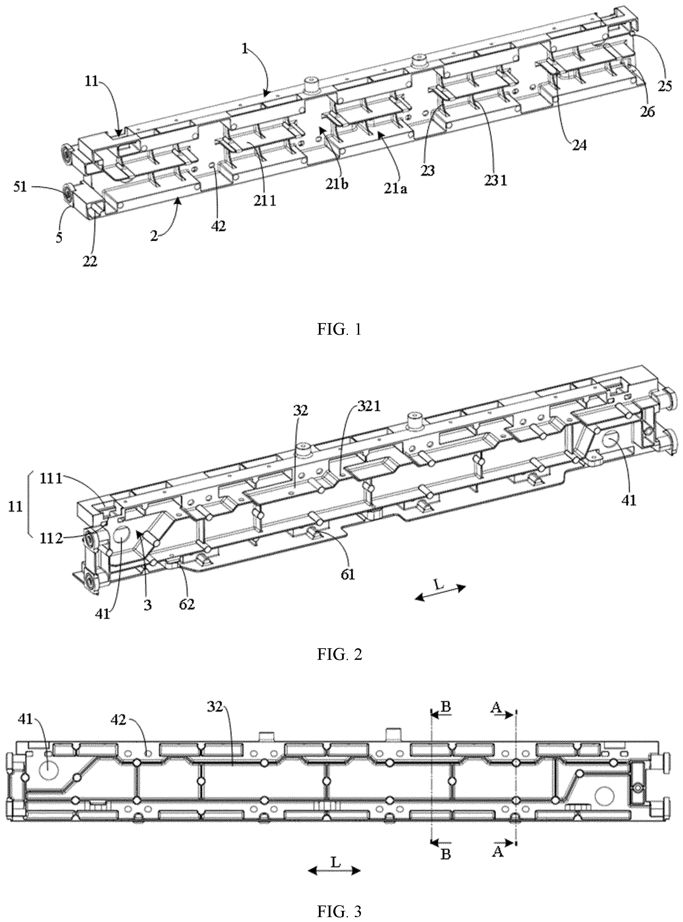

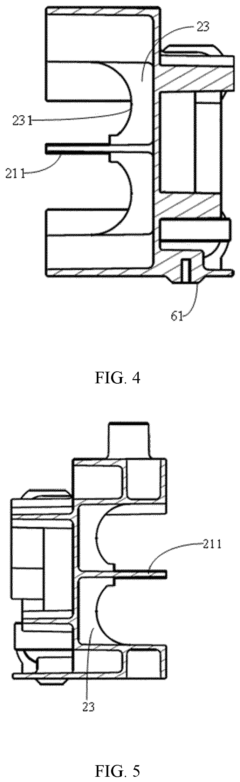

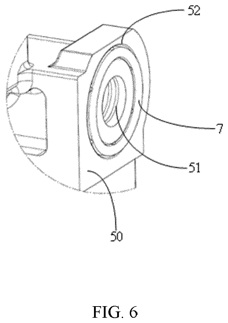

Combining with FIG. 1, FIG. 2, FIG. 3, FIG. 4, FIG. 5, and FIG. 6, the casing for the battery pack provided in embodiments of the present disclosure includes the cross beam, and the cross beam includes a top surface 1. The top surface 1 defines the mounting groove 11 configured to mount the output electrode base. The output electrode base may be assembled on the cross beam through the mounting groove 11, allowing the cross beam to have a function of mounting the electrode pole of the battery module, i.e., the mounting groove 11 of the output electrode base is integrated on a basis of the cross beam, enriching the function of the traditional cross beam and avoiding a fact that the traditional cross beam have a single function.

In addition, a width of the cross beam is larger than a width of the end plate of the battery module, which allows to mount a larger output electrode base, and thus may also withstand a higher voltage, provide a larger creepage gap, embed a nut with a larger specification, and play a better role in safety protection and stronger mounting and fixation.

The mounting groove 11 may be formed by casting, specifically through a lateral core-pulling mechanism, i.e., a lateral forming rod and a forming block should be first withdrawn from a workpiece during opening of a mold, to push out a product. The mounting groove 11 is formed in a position where the lateral forming rod and the forming block should be first withdrawn from the workpiece during opening of the mold.

The cross beam may be integrally formed to improve processing efficiency.

In some embodiments, a bottom plate of the cross beam is provided with a plurality of first protrusions, a bottom surface of the first protrusion 61 may define a mounting hole, and a steel wire thread sleeve is embedded in the mounting hole to achieve the mounting and fixation of a bottom component of the cross beam. In some embodiments, along a length direction L of the cross beam, there may be one, two, three, four or more first protrusions 61, and the number of the first protrusions 61 and the number of the mounting holes may be selected as needed. In some embodiments, the mounting hole may be a threaded hole, and the bottom component may be coupled to a bottom of the cross beam through a bolt.

The bottom plate of the cross beam is provided with a plurality of second protrusions 62, and the second protrusions 62 may define a threaded hole to achieve the mounting and fixation of components such as an electrical box or a BMS.

As shown in FIG. 1, the cross beam includes a first side surface 2, and the first side surface 2 defines a first avoidance groove 21a. The first avoidance groove 21a extends along the length direction L of the cross beam. The first avoidance groove 21a is configured to mount a collecting tube, so that the cross beam integrates the functions of mounting the collecting tube and the electrode pole of the battery module, achieving an application of various functions of the cross beam, and a high degree of integration, which may save an mounting space and have a strong practicality. In some embodiments, the collecting tube is provided in the first avoidance groove 21a, so that the cross beam may enclose the collecting tube within the cross beam, which provide protection for the collecting tube and may avoid the collecting tube being pressed. A possibility of damage to the collecting tube may be reduced when a collision occurs. The collecting tube may be embedded into the first avoidance groove 21a after assembly, which does not occupy too much space within the battery pack, reducing the space required for a cooling assembly, having a simple structure, a simple assembly, and a high assembly efficiency, and making a significant contribution to passability of an overall vehicle, an interior space of the vehicle, and a comfort degree. Since the end plate does not need to be provided with the mounting groove 11, the space occupied by the end plate is reduced, thereby increasing the space within the battery pack, so that the battery pack may carry more electricity, making a scheme layout and a range design of a vehicle model more flexible.

The cross beam may adopt a one-piece structure, specifically may be formed by casting. The casting forming may be combined with wall thickness, machining, assembly or welding with other components according to a stress condition, a design scheme is flexible, and a personalized need may be effectively solved. By arranging the mounting groove 11 and the first avoidance groove 21a on the cross beam, the cross beam has various functions, which may realize a rapid integrated molding production, accelerate a production beat and improve a product consistency. The cross beam may be made of magnesium alloy material, which may reduce weight by 33% compared to traditional aluminum alloy material and more than 60% compared to traditional steel material.

In some embodiments, the first avoidance groove 21a forms a support plate 211 configured to support the collecting tube, and the support plate 211 extends along the length direction L of the cross beam. The collecting tube is arranged above the support plate 211, and the support plate 211 is configured to support the collecting tube, which may avoid the collecting tube from being pressed, improve a stability of the collecting tube, and enhance a safety of the battery pack.

When the cooling assembly includes two groups of the collecting tubes, two support plates 211 are formed in the first avoidance groove 21a, and each group of the collecting tubes is positioned on the support plate 211, which may avoid the collecting tube from being pressed and improve the stability of the collecting tube.

Of course, three or more groups of the collecting tubes may be provided. In order to improve the stability of the collecting tube, the number of the support plates 211 is consistent with the number of the collecting tubes, and each group of the collecting tubes is positioned on one of the support plates 211.

A coupling plate 23 between two support plates 211 arranged in an up-and-down direction, which may improve the stability of the cross beam. The coupling plate 23 is provided with a grooved structure 231, which may reduce a casting defect caused by an excessive wall thickness and slow cooling of the coupling plate 23.

When the cooling assembly is in operation, a cooling liquid enters a channel of the collecting tube through an inlet pipe and enters a cooling tube channel of each cooling plate during flowing along the collecting tube. During the flow of the cooling liquid in the cooling tube, the cooling liquid may cool the battery cell. The cooling liquid after circulating is discharged from the cooling assembly through an outlet pipe, which may improve a heat dissipation effect of the battery cell, make an operational environment of the battery cell more suitable, and prolong a service life of the battery cell.

Combining with FIGS. 1 and 2, the cross beam includes a second side surface 3 opposite to the first side surface 2. The cross beam defines a through hole 41 for the inlet pipe or the outlet pipe to pass through, and the through hole 41 extends through the first side surface 2 and the second side surface 3. The through hole 41 may be a circular hole or a square hole. A main inlet pipe and a main outlet inlet pipe of a pipeline after a confluence of liquid cooling pipes may pass through the through hole 41, allowing the cross beam to integrate various functions, and have high degree of integration, which may save the mounting space and have the strong practicality.

In some embodiments, the second side surface 3 forms a reinforcing rib 32, and the reinforcing rib 32 defines a cable tie hole 321 configured to fix a wire harness. The wire harness may be fixed to the cable tie hole 321 through a cable tie, allowing the cross beam to integrate various functions, and have high degree of integration, which may save the mounting space and have the strong practicality, and may realize the rapid integrated molding production, accelerate the production beat and improve the product consistency.

In some embodiments, the first side surface 2 defines a second avoidance groove 21b configured to mount an adapter block, and the cross beam defines an adapter block mounting hole 42 configured to mount the adapter block. The adapter block mounting hole 42 is arranged to extend through the second avoidance groove 21b and the second side surface 3. A liquid cooling plate may be fixed to the cross beam by passing a fastener through the adapter block mounting hole 42, allowing the cross beam to integrate various functions, and have high degree of integration, which may save the mounting space and have the strong practicality, and may realize the rapid integrated molding production, accelerate the production beat and improve the product consistency.

The adapter block mounting holes 42 may be arranged in two rows in the up-and-down direction, each row of the adapter block mounting holes 42 may have one, two, three, or more. The number of the adapter block mounting holes 42 may be determined according to the number of the liquid cooling plates. The adapter block mounting hole 42 may be a square hole or a circular hole, and preferably, the adapter block mounting hole 42 is an oblong hole, which may absorb a tolerance during assembly.

In some embodiments, a mounting seat 5 is formed at an end of the cross beam along the length direction L of the cross beam, and the mounting seat 5 includes a mounting surface 50. The mounting surface 50 defines an edge beam mounting hole 51 configured to couple to an edge beam, which may achieve the assembly of the cross beam and the edge beam, allowing the cross beam to integrate various functions, and have high degree of integration, which may save the mounting space and have the strong practicality. The mounting hole may be a threaded hole. When the edge beam is coupled to the cross beam, the edge beam and the cross beam may be assembled by a locking of a bolt.

In some embodiments, the mounting seat 5 defines a groove 52 configured to mount a sealing member 7, and the groove 52 is arranged around the edge beam mounting hole 51. The groove 52 may extend in a circular, a rectangular, or a square shape. When the cross beam is coupled to the edge beam, the mounting surface 50 is in contact with the edge beam, and the sealing member 7 is embedded in the groove 52. Through the locking of the bolt, a flexible assembly and a reliable sealing between the cross beam and edge beam may be achieved. Optionally, the sealing member 7 may be a sealing ring. Optionally, the sealing member 7 may be an O-ring. Optional, the sealing member may be made of rubber material.

One, two, three, or more grooves 52 may be provided. In some embodiments, two or more grooves 52 may be provided to ensure the reliable sealing between the cross beam and the edge beam. In some embodiments, the mounting surface 50 defines a plurality of grooves 52, the plurality of grooves are spaced in a direction outward from a center of the edge beam mounting hole 51, and a sealing ring is provided in each groove 52, which improves the reliability of the sealing between the cross beam and the edge beam.

In order to meet the assembly requirement of the battery pack, the cross beam may be provided with a plurality of hole like structures. The hole like structure may be a lifting hole, a weight reduction hole, and a fixing screw hole. The lifting hole may be configured to mount a hook, allowing the hook to transport the battery pack under the action of a lifting mechanism. The weight reduction hole plays a role in reducing weight by removing materials to reduce an overall weight of the cross beam, and the weight reduction hole may be configured as a hollow structure, a through hole structure, etc. The fixing screw hole may be configured to mount a screw, and the cross beam may fix the battery module in the casing of the battery pack through the fixing screw hole.

The first side surface 2 defines a plurality of weight reduction holes, and the plurality of weight reduction holes are spaced along the length direction L and a height direction of the cross beam separately. Optionally, the weight reduction hole may be a square hole or a circular hole. Optionally, the weight reduction hole may be a blind hole defined in the first side surface 2 or the second side surface 3, or may be the through hole 41 extending through the first side surface 2 and the second side surface 3. The weight reduction hole may reduce the weight of the cross beam and meet a lightweight requirement of the battery pack.

A solid part of the cross beam defining each weight reduction hole forms a reinforcing plate. In some specific implementations, a plurality of reinforcing plates are arranged between the first side surface 2 and the second side surface 3. In order to ensure a stiffness requirement of the cross beam, the reinforcing plate should be thick enough, and to ensure an energy absorption effect of the cross beam at the same time, the reinforcing plate of the cross beam defining each weight reduction hole for buffering should be thin enough.

As shown in FIG. 1, the top surface 1 and the second side surface 3 of the cross beam define a first aperture 111 and a second aperture 112 perpendicularly oriented to each other, respectively. Due to an drafting angle of a casting product, a situation where a too deep aperture causes a significant thickness difference between a upper surface and a lower surface of a wall thickness of a hole position in a single direction may be alleviated, which is convenient for release of a mold.

In some embodiments, the cross beam is provided with a cylindrical protrusion 25, which may optimize an exhaust during casting and reduce defects such as shrinkage and porosity.

In some embodiments, a local corner position of the cross beam is designed with a depression 26, which may optimize the wall thickness, accelerate a cooling speed at this position after demolding, and reduce a generation of defects.

In some embodiments, the cross beam is provided with a jacking rod 24 configured to eject a part from a movable mold during demolding. Due to a small gap from an adjacent component, the jacking rod 24 may be optimized to have a flat shape.

In some embodiments, the first side surface 2 defines a weight reduction groove 22. A cylindrical structure is designed at an edge position with a large hole depth, which may optimize an air entrapment defect caused by poor exhaust at this position during casting.

The battery pack provided by embodiments of the present disclosure includes the casing of the battery pack provided in embodiments of the present disclosure. The vehicle provided by embodiments of the present disclosure includes the battery pack provided by embodiments of the present disclosure. The battery pack or the vehicle provided by embodiments of the present disclosure have the same advantages as the casing of the battery pack provided by embodiments of the present disclosure, which are not be repeated here.

It should be noted that in the present disclosure, relational terms such as "first" and "second" are only configured to distinguish one entity or operation from another entity or operation, and do not necessarily require or imply any actual relationship or order between these entities or operations. Moreover, terms "include", "comprise", or any other variation thereof are intended to encompass non-exclusive inclusion, such that a process, a method, an item, or an apparatus that includes a series of elements not only includes those elements, but also includes other elements that are not explicitly listed, or also includes elements inherent to such process, method, item, or apparatus. Without further limitations, elements limited by a statement "including one..." do not exclude an existence of other identical elements in the process, the method, the item, or the apparatus that includes the said elements.

In the present disclosure, unless otherwise specified and limited, terms "mount", "couple", "connect", "fix" and other terms should be broadly understood. For example, they may be a fixed connection, a detachable connection, or integrated. They may also be a mechanical connection, an electrical connection or communication with each other. They may be directly coupled or indirectly coupled through an intermediate medium. They may be an internal connection of two components or an interaction relationship between two components, unless otherwise specified. For ordinary those skilled in the art, specific meanings of the above terms in the present disclosure may be understood based on specific cases.

In the present disclosure, unless otherwise specified and limited, the first feature is "above" or "below" the second feature, which means that the first feature may be in direct contact with the second features, or the first feature may be in indirect contact with the second features through an intermediate media. Moreover, if the first feature is "on", "above" and "on top of" the second feature, which means that the first feature is directly or diagonally above the second feature, or simply indicates that the first feature is horizontally higher than the second feature. The first feature is "under", "below" and "on bottom of" the second feature, which means that the first feature is directly or diagonally below the second feature, or simply indicates that the horizontal height of the first feature is less than that of the second feature.

In the present disclosure, terms "an embodiment", "some embodiments", "an example", "a specific examples", or "some examples" means that a specific feature, structure, material, or characteristic described in connection with embodiments or examples is included in at least one embodiment or example of the present disclosure. In this specification, the illustrative expressions of the above terms do not necessarily refer to the same embodiments or examples. Moreover, the specific feature, structure, material, or characteristic described may be combined in any suitable manner in one or more embodiments or examples. In addition, those skilled in the art may connect and combine different embodiments or examples as well as features of different embodiments or examples described in this specification, without conflicting with each other.

Although embodiments of the present disclosure have been illustrated and described above, it may be understood that the above embodiments are illustrative and cannot be understood as a limitation of the present disclosure. Those ordinary skilled in the art may make changes, modifications, alternatives, and variations to the above embodiments within the scope of the present disclosure.

## Claims

1. A casing for a battery pack, comprising: a cross beam, wherein the cross beam comprises a top surface, and the top surface defines a mounting groove configured to mount an output electrode base.

2. The casing according to claim 1, wherein the cross beam comprises a first side surface, the first side surface defines a first avoidance groove, and the first avoidance groove extends along a length direction of the cross beam and is configured to mount a collecting tube.

3. The casing according to claim 2, wherein the first avoidance groove forms a support plate configured to support the collecting tube, and the support plate extends along the length direction of the cross beam.

4. The casing according to claim 2, wherein a number of the support plates is consistent with a number of the collecting tubes, and each group of the collecting tubes is positioned on one of the support plates.

5. The casing according to claim 3 or 4, wherein the first avoidance groove forms two support plates arranged in an up-and-down direction, a coupling plate is arranged between the two support plates arranged in the up-and-down direction, and the coupling plate is provided with a grooved structure.

6. The casing according to any one of claims 2-5, wherein the cross beam comprises a second side surface opposite to the first side surface; and
the cross beam defines a through hole for an inlet pipe or an outlet pipe to pass through, and the through hole extends through the first side surface and the second side surface.

7. The casing according to claim 6, wherein the second side surface forms a reinforcing rib, and the reinforcing rib defines a cable tie hole configured to fix a wire harness.

8. The casing according to claim 6 or 7, wherein the first side surface defines a second avoidance groove configured to mount an adapter block; and
the cross beam defines an adapter block mounting hole configured to mount the adapter block, and the adapter block mounting hole is arranged to extend through the second avoidance groove and the second side surface.

9. The casing according to any one of claims 1-8, wherein a mounting seat is formed at an end of the cross beam along a length direction of the cross beam, the mounting seat comprises a mounting surface, and the mounting surface defines an edge beam mounting hole configured to couple to an edge beam.

10. The casing according to claim 9, wherein the mounting surface defines a groove configured to mount a sealing member, and the groove is arranged around the edge beam mounting hole.

11. The casing according to claim 10, wherein the mounting surface defines a plurality of grooves, the plurality of grooves are spaced in a direction outward from a center of the edge beam mounting hole, and a sealing ring is provided in each groove.

12. The casing according to any one of claims 1-11, wherein a bottom plate of the cross beam is provided with a plurality of first protrusions, a bottom surface of the first protrusion defines a mounting hole, and a steel wire thread sleeve is embedded in the mounting hole to fix a bottom component of the cross beam.

13. The casing according to any one of claims 1-12, wherein a bottom plate of the cross beam is provided with a plurality of second protrusions, and the second protrusion defines a threaded hole.

14. A battery pack, comprising a casing according to any one of claims 1-13.

15. A vehicle, comprising a battery pack according to claim 14.
